# EUROPEAN PATENT SPECIFICATION

(11) **EP 2 391 818 B1**
(45) Date of publication and mention of the grant of the patent: **27.03.2013**
(21) Application number: 09776574.7
(22) Date of filing: 30.04.2009
(51) Int. Cl.: H02J 3/18, F03D 7/02, F03D 7/04

(54) **ADAPTIVE VOLTAGE CONTROL FOR WIND TURBINES**
ADAPTIVE SPANNUNGSSTEUERUNG FÜR WINDTURBINEN
COMMANDE DE TENSION ADAPTATIVE POUR ÉOLIENNES

(30) Priority: 30.01.2009 US 148765 P
(43) Date of publication of application: 07.12.2011
(73) Proprietor: DeWind Co., Irvine, CA 92614 (US)
(72) Inventor: STAPELFELDT, Karl-Friedrich, 23564 Lübeck (DE)
(74) Representative: Knoop, Philipp
(86) International application number: PCT/EP2009/003139
(87) International publication number: WO 2010/085987

(56) References cited:
- EP-A1- 1 512 869
- EP-A1- 1 914 419
- US-A- 5 225 712
- US-A1- 2005 042 098
- US-A1- 2006 028 025
- US-A1- 2006 082 936
- US-A1- 2008 106 099

## Description

### CROSS-REFERENCE TO RELATED APPLICATIONS

This patent application claims priority under 35 U.S.C. §119(e) to pending U.S. Provisional Patent Application Serial No. 61/148,765, that is entitled "ADAPTIVE VOLTAGE CONTROL FOR WIND TURBINES," that was filed on January 30, 2009, and entire disclosure of which is hereby incorporated by reference in its entirety herein.

### FIELD OF THE INVENTION

The present invention generally relates to the field of wind turbines and, more particularly, to controlling operation of wind turbines based upon grid conditions.

### BACKGROUND

The application of wind-powered generating systems in the past has been on a small scale when compared to the total generating capacity of an electrical power grid. A term that is often used to describe the relative quantity of wind-generated power is "penetration." Penetration is the ratio of wind-generated power to the total available generated power for a power grid. Previously, even in those locations where wind-generated power is highest, the penetration levels are under about a few percent. While this is a relatively small amount of power, and the rules that govern the operation of the wind turbines reflect this small penetration, it is clear that the penetration is increasing and therefore the operating rules for the wind turbines will be changing. For example, one operating principle that is being revised is the required amount of grid stability support that must be provided by wind turbines. As can be appreciated, as the penetration of wind turbines increases, the expectation that they contribute to the stability of powers grids becomes greater.

Power utilities today face an ever-growing demand for higher quality, reliable power and increased transmission capacity. A key to increasing reliability and capacity is ensuring that grid voltage is properly regulated. This helps prevent service disruptions, damage to electrical service equipment, generating plants, and other components of the power grid, and can help maximize transmission capacity. Generally, utilities keep voltage levels stable by maintaining a balance of real power and reactive power on their transmission grids.

Almost all bulk electric power is generated, transported, and consumed in alternating current (AC) networks. Elements of AC systems supply (or produce) and consume (or absorb or lose) two kinds of power: real power and reactive power. Real power accomplishes useful work (e.g., runs motors and lights lamps). Reactive power supports the voltages that must be controlled for system reliability.

In an AC electrical system, voltage and current pulsate (described mathematically by sine waves) at the system frequency (in North America this is 60 Hertz, or 60 times per second; in Europe this is 50 Hz, or 50 times per second). Although AC voltage and current pulsate at the same frequency, they may peak at different times (i.e., they may not be in phase). Power is the algebraic product of voltage and current. Over a cycle, power has an average value, called real (or active) power, measured in watts. There is also a portion of power with zero average value that is called reactive power, measured in volt-amperes reactive, or VARs. The total power is called apparent power, measured in volt-amperes, or VA. Reactive power has zero average value because it pulsates up and down, averaging to zero. Reactive power can be positive or negative, depending on whether the current peaks before or after voltage. By convention, reactive power, like real power, is positive when it is "supplied" and negative when it is "consumed" or absorbed. Consuming reactive power tends to lower voltage magnitudes, while supplying reactive power tends to increase voltage magnitudes.

Voltage control (keeping voltage within defined limits) in an electric power system is important for proper operation of electric power equipment to reduce the potential for damage such as overheating of generators and motors, to reduce transmission losses, and to maintain the ability of the system to withstand disturbances and reduce the potential of voltage collapse. A voltage collapse can occur when the system is trying to serve much more load than the voltage can support. Inadequate reactive power supply lowers voltage and, as voltage drops, current must increase to maintain the power supplied, causing the lines to consume more reactive power and the voltage to drop further. If current increases too much, transmission lines trip, or go off-line, overloading other lines and potentially causing cascading failures. Further, if voltage drops too low, some generators will automatically disconnect to protect themselves. Voltage collapse occurs when an increase in load or loss of generation or transmission facilities causes dropping voltage, which causes a further reduction in reactive power from capacitors and line charging, and still further voltage reductions. If the declines continue, these voltage reductions cause additional elements to trip, leading to further reduction in voltage and loss of power. The result is a progressive and uncontrollable decline in voltage, all because the power system is unable to provide the reactive power required to supply the reactive power demand. Therefore, the ability of various components of a power system to support power grids by supplying (or consuming) reactive power is an important feature.

Presently, geographically remote areas with high wind power potentials may not be viable candidates for wind farms due to limited grid transmission capacity and/or difficulties for matching the electrical production with the demand, or more generally, due to a "weak grid." A weak grid is typically one where it may be necessary for system designers to take voltage level and voltage fluctuations into account because there is a probability that the values might exceed the requirements of the standards set by the utilities when load and power production cases are considered. Weak grids are usually found in more remote places and in areas that were designed for relatively small loads.

For wind energy systems, one problem with weak grids is the variable voltage levels on the grid over the course of certain time periods. For example, the voltage level for a weak grid may vary throughout the day by several percent due to variable consumer loads. Furthermore, the connection of wind turbines to a weak grid tends to increase the voltage level due to the additional active power production by the wind turbines. Therefore, in cases where the consumer loads are low (i.e., the voltage level on the grid is relatively high), the connection of wind turbines to the power grid may cause the voltage levels to rise above maximum levels required by the standards, which is at a minimum undesirable and oftentimes unacceptable. US 2005/042098A1 discloses a method for controlling the active power delivery for a generator of a wind turbine connected to a power grid.
According to the present invention, a method for controlling the active power with improved efficiency is given by the subject matter of the independent claims.

### SUMMARY

The present invention at least generally relates to configuring and/or operating a wind turbine to adaptively control a voltage of a power grid. In one or more embodiments, a method and system for recognizing a condition of a power grid (e.g., fluctuations caused by variable consumer loads on a weak grid), and adaptively adjusting a voltage control scheme to substantially "ignore" voltage changes caused by the condition are provided. In this regard, the amount of reactive power consumed by the wind turbine may be minimized or reduced. Additionally, other features of the present invention include voltage control with active power derating for wind turbines and power factor control with active power derating for wind turbines. Various aspects of the present invention will now be described. Although each of the following aspects may relate or be applicable to the foregoing, the content of this introduction is not a requirement for any of these aspects unless otherwise noted.

A first aspect is embodied by a wind turbine that may be electrical-connected to a power grid, wherein the wind turbine includes a synchronous generator. The wind turbine may be configured and operated so as to selectively control a reactive power characteristic of the synchronous generator according to a control scheme when the wind turbine is electrically-connected with the power grid. Additionally, the wind turbine may be configured to recognize a predefined condition of the power grid (which hereafter may be referred to as a "predefined power grid condition"), and in response to recognizing such a predefined power grid condition, to modify its control scheme so as to reduce the amount of reactive power absorbed by the synchronous generator.

A number of feature refinements and additional features are applicable to the first aspect. These feature refinements and additional features may be used individually or in any combination. The following discussion is separately applicable to the first aspect, up to the start of the discussion of a second aspect.

In an embodiment of the first aspect, the predefined power grid condition is in the form of fluctuations in a voltage of the power grid due to consumer loads associated with the power grid. As an example, the fluctuations may be substantially periodic, and may have a period of a day, a week, a season, a year, or some other period. In the case where the fluctuations are periodic and have a period of one day, the fluctuations may be due to varying consumer loads on a weak power grid.

In one or more embodiments of the first aspect, the recognition of the predefined power grid condition may include measuring and/or analyzing a reactive power characteristic (e.g., reactive power absorbed or produced) of the synchronous generator for a period of time. As can be appreciated, a reactive power characteristic may be indicative of a voltage characteristic of the power grid (e.g., more reactive power characteristic may be indicative of a voltage characteristic of the power grid (e.g., more reactive power may be consumed by the synchronous generator when the voltage of the power grid is too high). In this regard, the recognition of the predefined power grid condition may include applying a proportional-integral (PI) controller to a reactive power characteristic of the synchronous generator. Further, the recognition of the predefined power grid condition may include subtracting a nominal reactive power characteristic from a measured reactive power characteristic of the synchronous generator. In this regard, the recognition of the predefined power grid condition may entail at least substantially "ignoring" a reactive power characteristic that is equal to or less than the nominal reactive power characteristic.

In one or more embodiments of the first aspect, the modification of the control scheme of the wind turbine may include generating an adapted control reference, and providing the adapted control reference to the control scheme. For example, the adapted control reference may be created by generating a first voltage reference dependent upon a measured reactive power characteristic of the synchronous generator and adding a nominal voltage reference (e.g., 100% of a rated voltage) to the first voltage reference to generate the adapted voltages reference. In this regard, the wind turbine may be configured to receive or otherwise utilize the adapted voltage reference, to measure or otherwise utilize a voltage of the power grid, and to selectively control a reactive power characteristic of the synchronous generator such that the measured voltage of the power grid substantially tracks the adapted voltage reference. As an example, the reactive power characteristic may be selectively controlled by adjusting a rotor current of the synchronous generator to reduce the amount of reactive power absorbed by the synchronous generator. As can be appreciated, the wind turbine operation may be configured to selectively control the reactive power characteristic at a rate that is greater than the rate which the adapted voltage reference is updated.

In one or more embodiments of the first aspect, the adapted control reference may be limited to a range that is dependent upon a rated voltage of the power grid (e.g., 95% to 105% of the rated voltage of the power grid). Additionally, in one or more embodiments, the control scheme may be implemented using an automatic voltage regulator (AVR). The AVR may be operative to receive a voltage reference, measure a voltage of the power grid, and control the voltage of the power grid to track the voltage reference by selectively adjusting a rotor current of the synchronous generator. To account for the grid condition, the voltage reference may be adapted dependent upon the recognition of the predefined power grid condition.

A second aspect is embodied by a wind turbine that may be electrically-connected to a power grid, wherein the wind turbine includes a synchronous generator. The wind turbine may be configured to operate in a first active power control mode for a first condition when the wind turbine is electrically-connected with the power grid. Further, the wind turbine may be configured to operate in a second active power control mode for a second condition when the wind turbine is electrically-connected with the power grid, wherein operating the wind turbine in the second active power control mode provides a different active power characteristic for the wind turbine than when operating the wind turbine in the first active power control mode.

A number of feature refinements and additional features are applicable to the second aspect. These feature refinements and additional features may be used individually or in any combination. The following discussion is separately applicable to the second aspect, up to the start of the discussion of a third aspect.

In one or more embodiments of the second aspect, the first active power control mode includes operating the synchronous generator at an active power level that is substantially equal to a rated active power level of the synchronous generator, and the second active power control mode includes operating the synchronous generator at an active power level that is less than the rated active power level of the synchronous generator.

In one or more embodiments of the second aspect, the first condition and the second condition are each dependent upon a voltage of the power grid or one or more physical characteristics of the synchronous generator. As an example, the first condition and second condition may each be determined by measuring a voltage of the power grid with the wind turbine being electrically-connected with the power grid, analyzing the measured voltage of the power grid, and operating the wind turbine in either the first active power control mode or the second active power control mode dependent upon the outcome of this analysis. The noted analysis may include comparing the measured voltage with a threshold voltage reference over a period of time (e.g., integrating a difference between the measured voltage and the threshold voltage reference). The wind turbine may be operated in one of the first active power control mode and the second active power control mode dependent upon this comparison.

In one or more embodiments of the second aspect, the active power characteristic is reduced when operating in the second active power control mode relative to the first active power control mode by an amount that is dependent upon a measured voltage of the power grid. As an example, the amount that the active power characteristic is reduced by may be proportional to an integral of the difference between a measured voltage of the power grid and a maximum voltage reference.

In one or more embodiments of the second aspect, the first condition and the second condition are each dependent upon a power factor reference. The power factor reference may be provided to the wind turbine by any suitable entity (e.g., a grid operator, a control algorithm, or the like). In this case, the first condition and second condition may be determined by receiving the power factor reference, comparing the power factor reference to a power factor capability (e.g., a PQ capability curve) of the synchronous generator, and operating the wind turbine in either the first active power control mode or the second active power control mode dependent upon this comparison. In one example, the active power characteristic is reduced when operating in the second active power control mode relative to the first active power control mode by an amount that is dependent upon one or more physical characteristics of the synchronous generator.

In one or more embodiments of the second aspect, the first condition and second condition are each dependent upon both a power factor reference and a voltage of the power grid. In this regard, the first condition and second condition may be determined by measuring a voltage of the power grid, and then analyzing the measured voltage of the power grid to generate a first active power reference. Further, a power factor reference may be received or otherwise utilized by the wind turbine, the power factor reference may be compared to a power factor capability of the synchronous generator (e.g., by utilizing a lookup table) to generate a second active power reference, and a minimum active power reference may be utilized for operation of the wind turbine, where that "minimum active power reference" is the smaller of the first active power reference and second active power reference. The wind turbine may be operated in either the first active power control mode or the second active power control mode dependent upon which of the first and second active power references is being utilized.

In one or more embodiments of the second aspect, the wind turbine is operated in the first active power control mode when the minimum active power reference is equal to the rated active power level of the synchronous generator, and the wind turbine is operated in the second active power control mode when the minimum active power reference is less than the rated active power level of the synchronous generator. Further, in one or more embodiments, the active power level of the wind turbine when operating in the second active power control mode is limited to a predetermined range (e.g., about 60% to 100% of a rated active power level).

In one or more embodiments of the second aspect, the wind turbine may include a turbine rotor coupled to the synchronous generator through a torque-regulating gearbox or "TRG." Such a TRG may include a combination of a hydraulic or hydrodynamic torque converter and a planetary gear system (e.g., a multi-stage, functionally interconnected revolving planetary gear system). In any case, changing the operation of the wind turbine between the first active power control mode and the second active power control mode may include adjusting operation of the torque regulator. For example and for the case of a TRG, the operational adjustment may include adjusting a torque conversion characteristic of the TRG. In one or more embodiments, the TRG includes a hydraulic circuit, and the operational adjustment may include adjusting a mass flow of hydraulic fluid through the hydraulic circuit. Further, the TRG may include a plurality of guide vanes disposed in a guide vanes housing, and the operational adjustment may include adjusting a position of the plurality of guide vanes. The operational adjustment may also be characterized as adjusting an amount of energy absorbed by the TRG.

A third aspect is embodied by a wind turbine that may be electrically-connected to a power grid, and more specifically where the wind turbine is configured to adaptively control a voltage for a generator of the wind turbine. The wind turbine may be configured to measure a reactive power characteristic of the generator over a period of time, and to then process the reactive power characteristic measurements to generate a corrected voltage factor. The wind turbine may be further configured to add the corrected voltage factor to a nominal voltage reference to generate an adapted voltage reference, and where this adapted voltage reference may be provided to an automatic voltage regulator (AVR) of the wind turbine.

A number of feature refinements and additional features are applicable to the third aspect. These feature refinements and additional features may be used individually or in any combination. The following discussion is separately applicable to the third aspect, up to the start of the discussion of a fourth aspect.

In one or more embodiments of the third aspect, the processing of the reactive power characteristic measurements to generate a corrected voltage factor includes applying a PI controller to the reactive power measurements. As an example, the PI controller may include a time constant that is greater than an hour. Further, the wind turbine may include a synchronous generator, and the AVR may be operative to adjust the reactive power characteristic by adjusting a rotor current of the synchronous generator.

In one or more embodiments of the third aspect, the adapted local voltage reference range may be between about 95% and 105% of a rated voltage of the power grid, and the corrected voltage factor may be limited to within a predefined range. Further, the wind turbine may be configured to apply a low pass filter to the measured reactive power characteristic, so that high frequency fluctuations may be removed. Additionally, the wind turbine may be configured to subtract a nominal reactive power reference from the measured reactive power characteristic so that, for example, the measured reactive power characteristic may be "ignored" when it is below the nominal reactive power reference.

A fourth aspect is embodied by a wind turbine that may be electrically-connected to a power grid, where the active power delivery for a generator of the wind turbine is controlled. The wind turbine may be configured to receive or otherwise utilize a threshold voltage reference, and furthermore to measure (or otherwise receive) a voltage of the power grid. The wind turbine may be configured to subtract the measured voltage from the threshold voltage reference to generate a voltage difference value, and this voltage difference value may be processed by the wind turbine to generate an adapted active power reference. Further, the adapted active power reference may be provided to an active power controller of the generator.

A number of feature refinements and additional features are applicable to the fourth aspect. These feature refinements and additional features may be used individually or in any combination. The following discussion is separately applicable to the fourth aspect, up to the start of the discussion of a fifth aspect.

In one or more embodiments of the fourth aspect, the adapted active power reference may be limited to within a predetermined range. Further, the processing of the voltage difference value may include applying an integrator to the voltage difference value, and the active power delivery may be reduced by an amount that is dependent upon this processing. In one example, the threshold voltage reference may be between about 101% and 105% of a rated voltage of the power grid. Additionally, the threshold voltage reference may be dependent upon a maximum reactive power that can be consumed by the synchronous generator when operating at a rated active power.

In one or more embodiments of the fourth aspect, the method may include reducing an active power delivery of the generator. In the case where the generator is a synchronous generator, the wind turbine may include a turbine rotor coupled to the synchronous generator through a torque regulator, for instance the above-noted TRG. In this regard, the reduction of the active power delivery of the generator may include adjusting operation of the torque regulator. For example and for the case of a TRG, the operational adjustment may include adjusting a torque conversion characteristic of the TRG. In one or more embodiments, the TRG includes a hydraulic circuit, and the operational adjustment of the TRG may include adjusting a mass flow of hydraulic fluid through the hydraulic circuit. Further, the TRG may include a plurality of guide vanes disposed in a guide vanes housing, and the operational adjustment of the TRG may include adjusting a position of the plurality of guide vanes. The operational adjustment of the TRG may also be characterized as adjusting an amount of energy absorbed by the TRG.

A fifth aspect is embodied by a wind turbine that may be electrically-connected to a power grid, where the active power delivery for a generator (e.g., a synchronous generator) of the wind turbine is controlled. The wind turbine may be configured to receive or otherwise utilize a power factor reference, and furthermore to analyze the power factor reference in relation to one or more physical capabilities of the generator. Additionally, the wind turbine may be configured to generate an adapted active power reference that is dependent upon the power factor reference and the one or more physical capabilities of the generator, and to then provide the adapted active power reference to an active power controller of the wind turbine generator.

A number of feature refinements and additional features are applicable to the fifth aspect. These feature refinements and additional features may be used individually or in any combination. The following discussion is separately applicable to the fifth aspect, up to the start of the discussion of a sixth aspect.

In one or more embodiments of the fifth aspect, the analysis of the power factor reference may include comparing the power factor reference with the one or more physical capabilities of the generator, and/or limiting the power factor reference to be within a predefined range. The wind turbine may be configured to limit the adapted active power reference to be within a predefined range.

In one or more embodiments of the fifth aspect, the wind turbine may be configured to reduce an active power delivery of the generator. In the case where the generator is a synchronous generator, the wind turbine may include a turbine rotor coupled to the synchronous generator through a torque regulator, such as the above-noted TRG. In this regard, the reduction of the active power delivery may include adjusting operation of the torque regulator. For example and for the case of a TRG, the operational adjustment may include adjusting a torque conversion characteristic of the TRG. In one or more embodiments, the TRG includes a hydraulic circuit, and the operational adjustment may include adjusting a mass flow of hydraulic fluid through the hydraulic circuit. Further, the TRG may include a plurality of guide vanes disposed in a guide vanes housing, and the operational adjustment may include adjusting a position of the plurality of guide vanes. The operational adjustment may also be characterized as adjusting an amount of energy absorbed by the TRG.

A sixth aspect is embodied by a wind turbine according to the present invention that may be electrically-connected to a power grid, were the active power delivery for a generator (e.g., a synchronous generator) of the wind turbine may be controlled. The wind turbine may be configured to receive or otherwise utilize a threshold voltage reference, and furthermore to measure (or otherwise utilize) a voltage of the power grid. The wind turbine may be configured to subtract the measured voltage from the threshold voltage reference to generate a voltage difference value, and to then process the voltage difference value to generate a voltage mode adapted active power reference. Additionally, the wind turbine may be configured to receive or otherwise utilize a power factor reference, to analyze the power factor reference in relation to one or more physical capabilities of the generator, and to generate a power factor mode adapted active power reference that is dependent upon the power factor reference and the one or more physical capabilities of the generator. Further, the wind turbine may be configured to determine the minimum between the power factor mode adapted active power reference and the voltage mode adapted active power reference to generate a minimum adapted active power reference, and to then provide the minimum adapted active power reference to an active power controller of the wind turbine generator.

A number of feature refinements and additional features are applicable to the sixth aspect embodied by a wind turbine according to the present invention. These feature refinements and additional features may be used individually or in any combination. The following discussion is separately applicable to the sixth aspect, up to the start of the discussion of a seventh aspect.

In one or more embodiments of the sixth aspect, the wind turbine may be configured to limit each of the power factor mode adapted active power reference and the voltage mode adapted active power reference to within a predetermined range. Further, the processing of the voltage difference value may include applying an integrator to the voltage difference value.

In one or more embodiments of the sixth aspect, the threshold voltage reference may be between about 101 % and 105% of a rated voltage of the power grid, and may be dependent upon a maximum reactive power that can be consumed by the synchronous generator when operating at a rated active power.

In one or more embodiments of the sixth aspect, the active power delivery may be reduced (i.e., derated) by an amount that is dependent upon at least one of the processing of the voltage difference value and the subsequent analysis of the same in relation to one or more physical capabilities of the generator. As an example, the analysis may include comparing the power factor reference with the one or more physical capabilities of the generator. Further, the wind turbine may be configured to limit the power factor reference to be within a predefined range.

In one or more embodiments of the sixth aspect, the wind turbine may be configured to reduce an active power delivery of the generator. In the case where the generator is a synchronous generator, the wind turbine may include a turbine rotor coupled to the synchronous generator through a torque regulator, such as the above-noted TRG. In this regard, the reduction of active power delivery of the generator may include adjusting operation of the torque regulator. For example and for the case of a TRG, the operational adjustment may include adjusting a torque conversion characteristic of the TRG. In one or more embodiments, the TRG includes a hydraulic circuit, and the operational adjustment may include adjusting a mass flow of hydraulic fluid through the hydraulic circuit. Further, the TRG may include a plurality of guide vanes disposed in a guide vanes housing, and the operational adjustment may include adjusting a position of the plurality of guide vanes. The operational adjustment may also be characterized as adjusting an amount of energy absorbed by the TRG.

A seventh aspect is embodied by a wind turbine that may be electrically-connected to a power grid, wherein the wind turbine includes a synchronous generator. The wind turbine may be configured to receive or otherwise utilize a reference for a control scheme, and for the wind turbine to then operate according to the control scheme dependent upon the reference. Further, the wind turbine may be configured to monitor or otherwise receive a characteristic of the power grid, and to then adapt the reference dependent upon the characteristic of the power grid.

A number of feature refinements and additional features are applicable to the seventh aspect These feature refinements and additional features may be used individually or in any combination. A number of the features described above in relation to one or more of the first through sixth aspects may be applicable to the seventh aspect. For instance, in one or more embodiments of the seventh aspect, the characteristic of the power grid may be indicative of a predefined power grid condition. The predefined power grid condition may be in the form of fluctuations in a voltage of the power grid due to consumer loads associated with the power grid. These fluctuations may be substantially periodic, and may have a period of a day, a week, a season, a year, or some other period. In the case where the fluctuations are periodic and have a period of one day, the fluctuations may be due to varying consumer loads on a weak power grid.

Additionally, in one or more embodiments of the seventh aspect, the process for adapting the reference dependent upon the characteristic of the power grid may include measuring and/or analyzing a reactive power characteristic (e.g., reactive power absorbed or produced) of the synchronous generator for a period of time. As can be appreciated, a reactive power characteristic may be indicative of a voltage characteristic of the power grid (e.g., more reactive power may be consumed by the synchronous generator when the voltage of the power grid is too high). In this regard, the process for adapting the reference may include applying a proportional-integral (PI) controller to a reactive power characteristic of the synchronous generator. Further, the process for adapting the reference may include subtracting a nominal reactive power characteristic from a measured reactive power characteristic of the synchronous generator. In this regard, the process for adapting the reference may entail at least substantially "ignoring" a reactive power characteristic that is equal to or less than the nominal reactive power characteristic.

In one or more embodiments of the seventh aspect, the adapted reference that is provided to the control scheme may be created by generating a first voltage reference dependent upon a measured reactive power characteristic of the synchronous generator and adding a nominal voltage reference (e.g., 100% of a rated voltage) to the first voltage reference to generate the adapted voltage reference. In this regard, the wind turbine may be configured to receive or otherwise utilize the adapted voltage reference, to measure or otherwise utilize a voltage of the power grid, and to selectively control a reactive power characteristic of the synchronous generator such that the measured voltage of the power grid substantially tracks the adapted voltage reference. As an example, the reactive power characteristic may be selectively controlled by adjusting a rotor current of the synchronous generator to reduce the amount of reactive power absorbed by the synchronous generator. As can be appreciated, the wind turbine operation may be configured to selectively control the reactive power characteristic at a rate that is greater than the rate which the adapted voltage reference is updated.

In one or more embodiments of the seventh aspect, the adapted reference that is provided to the control scheme may be limited to a range that is dependent upon a rated voltage of the power grid (e.g., 95% to 105% of the rated voltage of the power grid). Additionally, in one or more embodiments, the control scheme may be implemented using an automatic voltage regulator (AVR). The AVR may be operative to receive a voltage reference, measure a voltage of the power grid, and control the voltage of the power grid to track the voltage reference by selectively adjusting a rotor current of the synchronous generator. To account for a condition of the power grid, the voltage reference may be adapted dependent upon the recognition of the predefined power grid condition.

In addition to the exemplary aspects and embodiments described above, further aspects and embodiments of the present invention will become apparent by reference to the drawings and by study of the following descriptions.

### BRIEF DESCRIPTION OF THE DRAWINGS

Figure 1 is a schematic diagram of one embodiment of a wind turbine that includes an adaptive voltage controller.
Figure 2A is a cross-sectional schematic representation of one embodiment of a torque-regulating gearbox that may be used by the wind turbine of Figure 1.
Figure 2B is an exploded, perspective view of a hydrodynamic torque converter used by the torque-regulating gearbox of Figure 2A.
Figure 2C is a plan view of adjustable guide vanes, used by the hydrodynamic torque converter of Figure 2B, in a maximum open position.
Figure 2D is a plan view of the adjustable guide vanes, used by the hydrodynamic torque converter of Figure 2B, in a closed position.
Figure 3 is a graph of grid voltage versus time for a weak grid.
Figure 4 is a block diagram of one embodiment of an adaptive voltage controller that may be used by the wind turbine of Figure 1.
Figure 5 is a block diagram of one embodiment of an adaptive voltage controller with active power derating that may be used by the wind turbine of Figure 1.
Figure 6 is an active and reactive power capability curve for a synchronous generator.
Figure 7 is an operations protocol for one embodiment of an adaptive control feature for a wind turbine.
Figure 8 is a monitoring protocol that may be used with the operations protocol of Figure 7.
Figure 9 is a protocol for modifying a control scheme for a wind turbine that may be used with the operations protocol of Figure 7.
Figure 10 is an operations protocol of one embodiment of a control feature for a wind turbine that includes active power derating.
Figure 11 is a monitoring protocol that may be used with the operations protocol of Figure 10.
Figure 12 is another monitoring protocol that may be used with the operations protocol of Figure 10.
Figure 13 is an operations protocol for one embodiment of another adaptive control feature for a wind turbine.

### DETAILED DESCRIPTION

While the invention is susceptible to various modifications and alternative forms, specific embodiments thereof have been shown by way of example in the drawings and are herein described in detail. It should be understood, however, that it is not intended to limit the invention to the particular form disclosed, but rather, the invention is to cover all modifications, equivalents, and alternatives falling within the scope and spirit of the invention as defined by the claims.

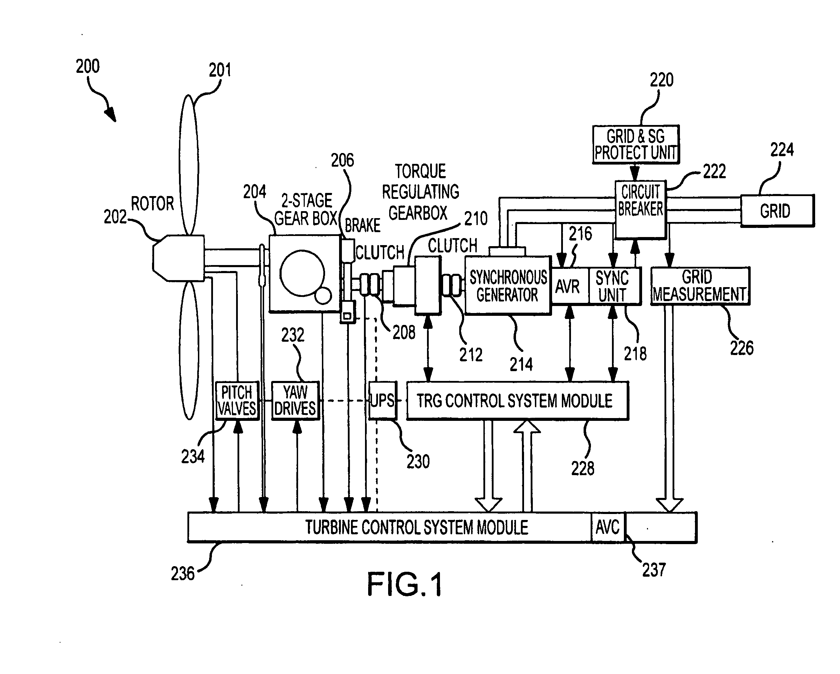

Figure 1 is a schematic diagram of one embodiment of an exemplary wind turbine 200 that may be configured to provide adaptive voltage control and/or adaptive power factor (PF) control. In operation, wind imparts energy to the blades 201 of a wind rotor 202, which in turn imparts a mechanical torque onto a shaft of a synchronous generator 214. The synchronous generator 214 is coupled directly to a power grid 224 to provide power to customers using the power grid 224. To adjust and control the rotational speed and torque applied to the synchronous generator 214, a fixed 2-stage mechanical gearbox 204 and a torque-regulating gearbox (TRG) 210 are disposed between the synchronous generator 214 and the wind rotor 202. Further, a turbine control system module 236 (which includes an Adaptive Voltage or PF Controller (AVC) 237) and a torque-regulating gearbox or TRG control system module 228 may be provided to monitor and control the various functions of the wind turbine 200. Each of the various components of the wind turbine 200 is described in greater detail below.

In on example the synchronous generator 214 is a 2 Megawatt (MW), 4 pole self-excited synchronous generator that operates at a constant frequency of 1800 RPM for 60 Hz power systems (1500 RPM for 50 Hz power systems), although other synchronous generators may be utilized. An Automatic Voltage Regulator (AVR) 216 may be coupled to the synchronous generator 214 to provide voltage control, power factor control, synchronization functions, and the like. Advantageously, since the synchronous generator 214 is directly connected-to the power grid 224, the need for complex power electronics to condition or transform the power may be eliminated. As can be appreciated, any suitable method may be used for the excitation of the synchronous generator 214. In one embodiment, the excitation system includes a pilot exciter, which may include a permanent magnet generator (PMG). Advantageously, this configuration may eliminate the requirement of an outside power supply to provide excitation, as well as eliminating the need for slip rings and/or brushes, which may reduce the maintenance requirements of the synchronous generator 214.

As noted above, since the rotor speed of the synchronous generator 214 is fixed to the frequency of the power grid 224 and the wind speed is variable, the TRG 210 is provided to convert the torque and speed of the shaft of the wind rotor 202 to a form suitable for the synchronous generator 214. The TRG 210 may be of any appropriate configuration, for instance the TRG 210 may be in the form of a superimposition gearbox of any of a number of configurations. In one example, the TRG 210 is a combination of a torque converter and a planetary gear system. A representative configuration for the TRG 210 is the WinDrive® available from Voith Turbo GmbH and Co. KG, having a place of business in Heidenheim, Germany. One or more features that may be used in relation to the TRG 210 are disclosed in U.S. Patent Application Publication Nos.: US 2005/0235636, entitled "Hydrodynamic Converter," and published on October 27, 2005; US 2005/0194787, entitled "Control System for a Wind Power Plant With Hydrodynamic Gear," and published on September 8, 2005; and US 2008/0197636, entitled "Variable-Speed Transmission for a Power-Generating,' and published on August 21, 2008, the entire disclosure of these three published applications being incorporated by reference herein.

The TRG 210 may be characterized as being disposed in a drive train that extends between the wind rotor 202 and the synchronous generator 214 (e.g., the drive train transferring the rotation of the wind rotor 202 to the synchronous generator 214). Any appropriate type of torque regulator or torque-regulating device/system may be utilized in place of the TRG 210 (in which case the above-noted control module 228 may also be referred to as a "torque regulator control module 228"). The torque regulator or torque-regulating device/system may be incorporated in any appropriate manner in relation to the drive train that extends between the wind rotor 202 and the synchronous generator 214 (e.g., at one or more locations). Any appropriate way of regulating the torque transfer between the wind rotor 202 and the synchronous generator 214 may be utilized (e.g., electrically, hydraulically).

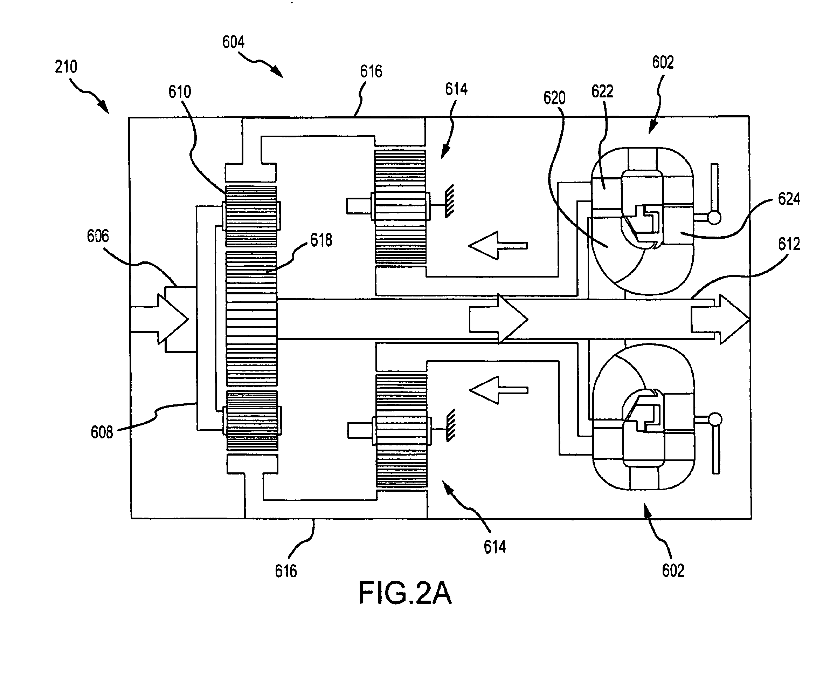

In on example shown, in Figures 2A-2D, the TRG 210 includes a combination of a hydraulic or hydrodynamic torque converter 602, and a 2-stage functionally interconnected revolving planetary gear system 604 positioned between the 2-stage mechanical gearbox 204 and the synchronous generator 214. In the revolving planetary gear system 604, input power from an input shaft 606 (which is rotatably driven by rotation of the wind rotor 202) is supplied to a carrier 608 of the left stage of the revolving planetary gear system 604. A plurality of planetary gears 610 are rotatably mounted on the carrier 608. Any appropriate number of planetary gears 610 may be utilized. Simultaneously, a hydrodynamic circuit drives the outer annulus (ring) gear 616 via a control drive. In most revolving planetary gear systems, one of the three elements (i.e., planet gear carrier, ring gear, or sun gear) is fixed. In the TRG 210 however, all three elements of the left stage of the planetary gear system 604 may rotate. Between the annulus gear 616 and the fluid-machine it may be necessary to adapt speed and direction of rotation by means of a fixed gear stage 614. The revolving planetary gear system 604 leads both power flows via a sun gear 618 to an output shaft 612 that connects to the synchronous generator 214. In the hydraulic circuits, control power is taken from the output shaft 612 with a pump wheel 620 of the hydrodynamic torque converter 602 and returned to the revolving planetary gear system 604 via a turbine wheel 622 of the hydrodynamic torque converter 602. Power flow in a variable speed gear unit can vary continuously by an interacting combination of the revolving planetary gear system 604 and the hydrodynamic torque converter 602.

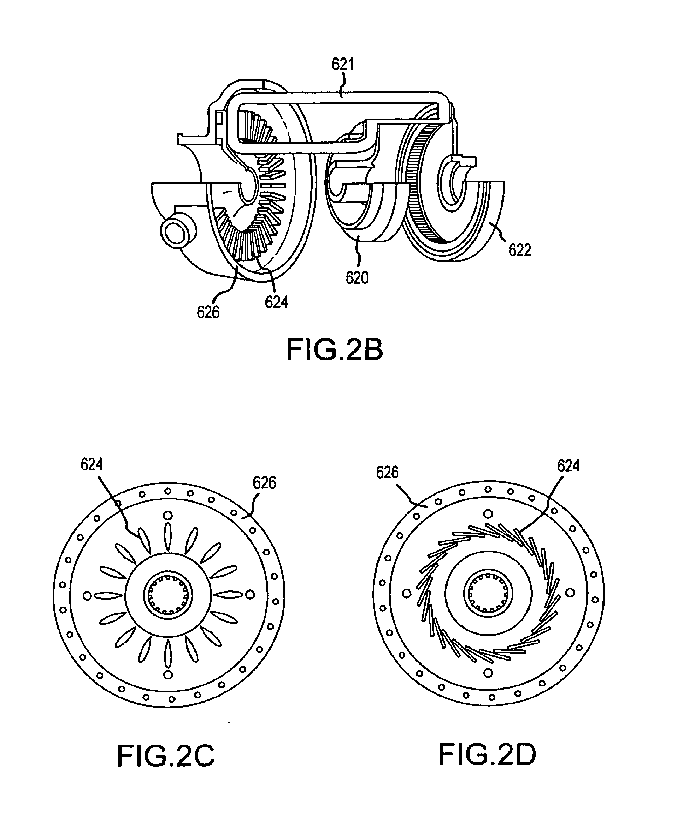

The hydrodynamic torque converter 602 is provided with adjustable guide vanes 624 (incorporated by a guide vane housing 626) and can thus be used as an actuator or control variable for the power consumption of the pump wheel 620. The energy content of the fluid and torque generated by the turbine wheel 622 varies with changes in pump wheel 620 power consumption. Rotation of the turbine wheel 622 is at least in part dictated or otherwise controlled by the position of the guide vanes 624. Figure 2C shows the guide vanes 624 in the maximum open position (which would allow the turbine wheel 622 to rotate at a maximum speed under current conditions). Figure 2D shows the guide vanes 624 in the closed position. Adjusting the position of the guide vanes 624 between the open position (Figure 2C) and closed position (Figure 2D) controls the rotational speed of the turbine wheel 622, as well as the energy "absorbed" by the hydrodynamic torque converter 602.

The heart of a hydrodynamic torque converter 602 is its hydraulic circuit; including the pump wheel 620, turbine wheel 622, and a guide wheel or guide vane housing 626 with adjustable guide vanes 624. These components are combined in a common housing that contains hydraulic oil or any other appropriate fluid of an appropriate viscosity. The flow path of hydraulic fluid in the common housing is shown schematically in Figure 2B at the point indicated by the reference numeral 621. The mechanical energy of the input shaft 606 is converted into hydraulic energy through the pump wheel 620. In the turbine wheel 622, the same hydraulic energy is converted back into mechanical energy and transmitted to the output shaft 612. The adjustable guide vanes 624 of the guide wheel 626 regulate the mass flow in the hydraulic circuit. When the guide vanes 624 are closed (i.e., low mass flow; Figure 2D), the power transmission is at its minimum. When the guide vanes 624 are completely open (i.e., large mass flow; Figure 2C), the power transmission is at its maximum. Because of the change in mass flow (due to the adjustable guide vanes 624), the speed of the turbine wheel 622 can be adjusted to match the various operating points of the synchronous generator 214.

In operation and referring now to both Figure 1 and Figures 2A-2D, the TRG control system module 228 of the wind turbine 200 may control the positioning of the guide vanes 624 of the TRG 210 so that the rotational speed and torque of the rotor shaft of the synchronous generator 214 is suitably controlled. That is, the active power produced by the synchronous generator 214 may be dynamically controlled. In this regard, the TRG control system module 228 may communicate with the turbine control system module 236 to achieve this function. The control system modules 228 and 236 may be physically or logically isolated, or may be combined into a single unit. Further, the control system modules 228 and 236 may be implemented in hardware, software, a combination thereof, or in any appropriate manner. As an example, the control system modules 228 and 236 may be implemented in one or more "off-the-shelf" or customized microcontrollers.

Although one example of the TRG 210 is described above, again it should be appreciated that any suitable configuration (e.g., any torque-regulating device (TRD)) may be provided to convert the torque and speed of the shaft of the wind rotor 202 to a form suitable for the synchronous generator 214. As an example, a TRD that includes electrical mechanisms (as opposed to hydraulic) to regulate the torque and speed of the shaft of the wind rotor 202 may be used.

The wind turbine 200 of Figure 1 again includes a wind rotor 202 that in turn includes a plurality of rotor blades 201 (e.g., three rotor blades) that may be designed for optimum aerodynamic flow and energy transfer. Any appropriate number of rotor blades 201 may be utilized. Further, the wind rotor 202 may include a pitch control system that is operable to adjust the angle of the rotor blades 201 in a desired/required manner. To achieve this functionality, the wind rotor 202 may include a hydraulic pitch control system that includes pitch valves 234 that are controllable by the turbine control system module 236. The position or pitch of the rotor blades 201 could be simultaneously or collectively adjusted, or could be independently adjusted.

In addition to pitch control, the wind turbine 200 of Figure 1 may also include controllable yaw drives 232 that are operable to adjust the direction that the wind turbine 200 faces (specifically the direction that the wind rotor 202 faces). For example, the turbine control system module 236 may control the yaw drives 232 to rotate the wind rotor 202 and its rotor blades 201 to face into the direction of the wind, such that the efficiency of the wind turbine 200 may be optimized.

The wind turbine 200 may also include an uninterruptable power supply (UPS) 230. The UPS 230 may be coupled to various components (e.g., the pitch valves 234, the control system modules 228 and 236, and the like) and functions to provide power to the components, especially when a main source of power is not available. The UPS 230 may include any type of power system, including one or more batteries, photovoltaic cells, capacitors, flywheels, and the like.

The wind turbine 200 may also include a controllable mechanical brake 206 coupled between the 2-stage gearbox 204 and the TRG 210. The brake 206 may be controlled by the turbine control system module 236 to reduce the rotational speed of the wind rotor 202. It should be appreciate that any suitable braking mechanism may be used, including but not limited to tip brakes, ailerons, spoilers, boundary layer devices, and the like. One or more brakes of any appropriate type may be included in the drive train between the wind rotor 202 and the synchronous generator 214, for instance so as to be disposed between the wind rotor 202 and the TRG 210. In addition, friction clutches 208 and 212 may be disposed in the mechanical drive train to limit the torque applied between components and to selectively couple and decouple the various shafts of the drive train components.

As can be appreciated, before the synchronous generator 214 is coupled directly to the power grid 224, certain conditions must be met. For example, the stator voltage of the synchronous generator 214 must substantially match the voltage of the power grid 224, and the frequency and phase of the voltages must match as well. To achieve this functionality, a synchronization unit 218, a grid measurement unit 226, and a circuit breaker 222 may be provided for the wind turbine 200. In operation, the synchronization unit 218 may communicate with the AVR 216 and the control system modules 236 and 228 to adjust the voltage characteristics of the synchronous generator 214 to match those of the power grid 224 as measured by the grid measurement unit 226. Once the voltage characteristics substantially match on both the generator side and the power grid side, the synchronization unit 218 may send a command to the circuit breaker 220 to close the circuit, thereby coupling the synchronous generator 214 to the power grid 224. The circuit breaker 222 may also be coupled to a grid and generator protection unit 220 that is operative to sense harmful conditions where it may be desirable to disconnect the wind turbine 200 from the power grid 224.

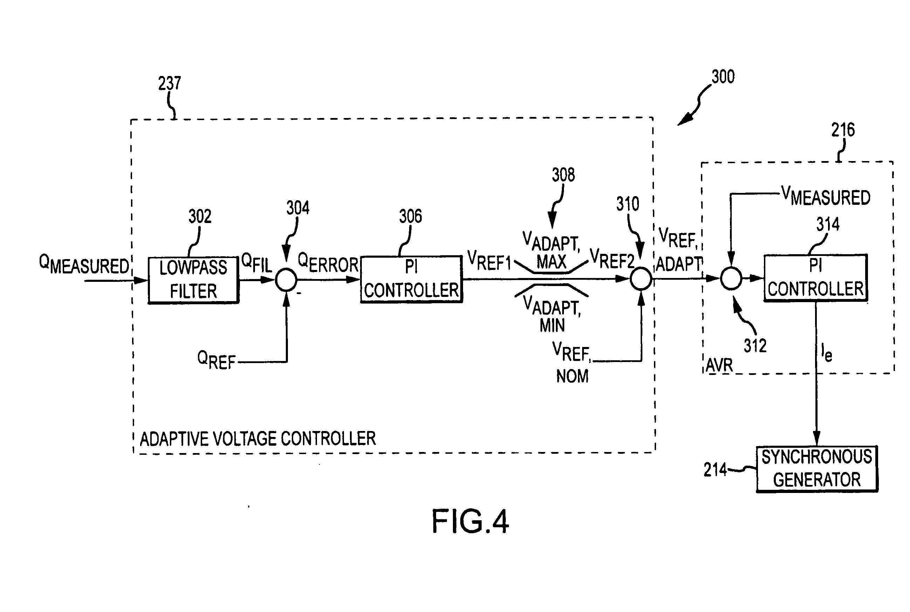

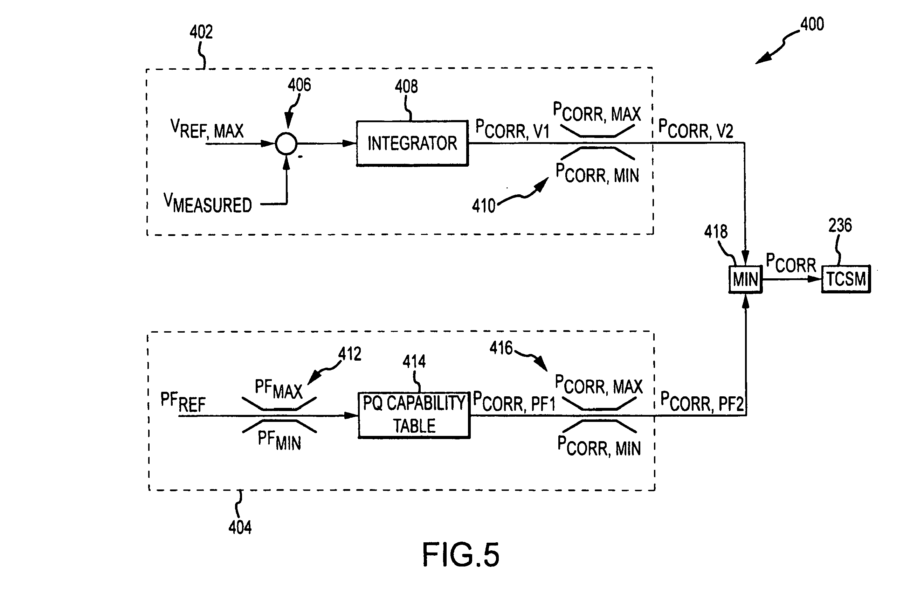

As noted above, the turbine control system module 236 includes the AVC 237 that may be configured to adaptively control the output voltage, PF, and active power delivery of the synchronous generator 214 in response to detecting at least certain grid conditions. The specific details of embodiments of the AVC 237 are described below with reference to Figures 4 and 5. Although the AVC 237 may be described in relation to the configuration of the wind turbine 200, it may be utilized by various other wind turbine designs that utilize a synchronous generator.

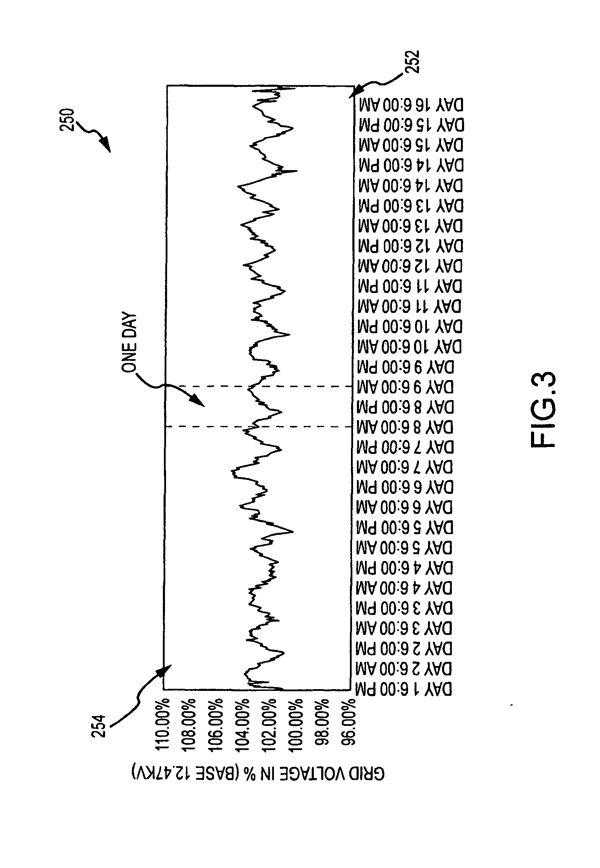

Figure 3 illustrates a graph 250 of grid voltage (dark line) versus time for a weak grid. As shown, the axis 254 represents the grid voltage expressed as a percentage of the rated grid voltage. The axis 252 represents time, with each label along the axis 252 being separated by twelve hours. From the graph 250 it can be seen that the grid voltage fluctuates from about 101% to 104% of the rated grid voltage throughout each day due to variable consumer loads and/or a weak grid. In certain conditions, it may be desirable to utilize wind turbine generators to control the voltage on a power grid by supplying or consuming reactive power. However, it has been observed that for weak grids, it may not be possible for individual wind turbine generators to reduce the voltage of the power grid during times of light consumer loads. As a result, the wind turbine generators may consume the maximum possible amount of reactive power for long periods of time in an effort to reduce the grid voltage. This extended reactive power consumption by the wind turbine may decrease the efficiency of the wind turbine generator, as well as impair the delivery of active power.

To remedy this problem, the adaptive voltage controller (AVC) 237 may be configured to determine or recognize conditions when the grid voltage is above the rated voltage due to a certain condition (e.g., fluctuations due to variable consumer loads), and in response to identifying such a condition, to minimize the reactive power consumed by the synchronous generator 214. In this regard, the synchronous generator 214 may not act to reduce the grid voltage unless the grid voltage has reached an unacceptable level (e.g., at least 105% of the rated grid voltage) or if the grid voltage is above the rated grid voltage due to conditions other than the conditions that are to be "ignored" by the AVC 237 (e.g., periodic fluctuations in the grid voltage).

Figure 4 illustrates a functional block diagram 300 that may be used by the adaptive voltage controller or AVC 237 shown in Figure 1. Generally, the AVC 237 in this configuration is operative to provide an adapted voltage reference to the AVR 216, which in turn modifies the excitation current iₑ in the rotor winding of the synchronous generator 214 to regulate the voltage of the synchronous generator 214. The effect of the adapted voltage reference is generally to cause the AVR 216 to ignore voltage fluctuations in the power grid 224 that are due to the normal hourly, daily, seasonal, yearly, or other fluctuations caused by variable consumer loads on a weak grid. Initially, the AVC 237 receives a measured reactive power signal Q_{measured} (e.g., from the grid measurement unit 226, from the AVR 216, or the like). The measured reactive power Q_{measured} is then filtered by a low pass filter 302 to generate a Q_{FIL} signal. The low pass filter 302 generally operates to remove any high frequency fluctuations in the measured reactive power Q_{measured}. Once the measured reactive power Q_{measured} has been filtered, a nominal reactive power reference Q_{REF} is then subtracted from Q_{FIL} by a subtractor 304, which generates a reactive power error signal that is fed into a Proportional-Integral (PI) controller 306. The nominal reactive power reference Q_{REF} may be any value, including zero VARS, depending on the desired operation for the wind turbine 200.

In operation, the PI controller 306 provides an output V_{REF1} that is dependent upon characteristics of the difference between O_{measured} and Q_{REF} (i.e., Qₑᵣᵣₒᵣ). More specifically, V_{REF1} is related to the weighted sum of the reactive power error signal Qₑᵣᵣₒᵣ and the integral of the reactive power error signal Qₑᵣᵣₒᵣ. So that the PI controller 306 may suitably adjust the reference voltage supplied to the AVR 216, the PI controller 306 may have a time constant that is relatively large (e.g., several seconds, several minutes, several hours, or more). In this regard, the voltage reference will only be adapted when the weighted sum of the reactive power error signal Qₑᵣᵣₒᵣ is large (e.g., more than 1 kilowatt, more than 100 kilowatts, or the like) and/or has persisted for a period of time (e.g., several minutes, several hours, or the like) such that hourly, daily, weekly, or other periodic grid fluctuations may be ignored.

To constrain the output of the Pl controller 306, the V_{REF1} signal may be fed into a limiter 308 that is operative to limit V_{REF1} to within V_{ADAPT,MIN} and V_{ADAPT,MAX}. As an example, V_{ADAPT,MAX} and V_{ADAPT,MIN} may be +3% and -3% of the rated grid voltage, respectively, or whatever suitable limits for the adapted reference voltage that may be desirable. Each of V_{ADAPT,MAX} and V_{ADAPT,MIN} may be of any appropriate value.

After the limiter 308, a nominal voltage reference signal V_{REF,NOM} may be added to the limited voltage reference signal V_{REF2} by the adder 310 to generate a V_{REFA,DAPT} signal. The V_{REF,NOM} signal may be 100% of the rated voltage, for example. The V_{REF,ADAPT} signal may then be provided to the AVR 216, which may in turn control the excitation current iₑ of the synchronous generator 214 to maintain the voltage at the stator of the synchronous generator 214 at V_{REF,ADAPT}. To achieve this, the AVR 216 may feed an error signal from a subtractor 312 into a PI controller 314, which may then output an excitation current iₑ to the rotor winding of the synchronous generator 214.

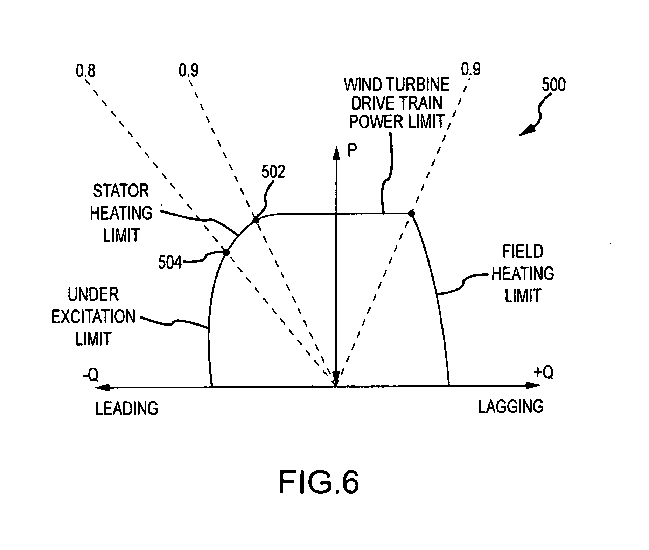

Figure 5 illustrates a block diagram of one embodiment of adaptive voltage/PF controller 400 with active power derating and that may be used by the AVC 237. Generally, the controller 400 may be operable to permit the wind turbine 200 to increase the reactive power consumed to a level that is above the maximum reactive power that can be consumed when the synchronous generator 214 is operating at rated power (e.g., 2 MW). This feature is achieved by derating the active power delivery of the synchronous generator 214 when necessary. That is, the inherent properties of the synchronous generator 214 may be used to permit the synchronous generator 214 to consume additional reactive power under certain conditions by reducing the active power delivery (e.g., from 2MW to 1.7 MW). This functionality may be desirable when synchronous generators are coupled to weak grids, which may have tendencies for voltage levels to rise above rated levels under light consumer load conditions. A discussion of the relationship between active power and reactive power capabilities of the synchronous generator 214 is presented below with reference to Figure 6.

The first portion of the controller 400 is a Voltage Control Mode (VCM) adaptive controller 402 that is operable to generate a derated active power reference P_{CORR,V2} when the voltage V_{measured} of the synchronous generator 214 rises above a threshold voltage V_{REF,MAX} (e.g., above 103% of rated voltage). To achieve this functionality, the measured voltage V_{measured} of the synchronous generator 214 is first subtracted from V_{REF,MAX} by a subtractor 406 to generate an error signal. Then, this error signal is fed into an integrator 408, which is operable to generate a first corrected active power reference P_{CORR,V1}. As an example, P_{CORR,V1} may be number between 0 and 1, such that when multiplied by the rated active power for the synchronous generator 214, a value that is between 0% and 100% of the rated active power is generated (e.g., 0.8 x 2MW = 1.6 MW). To constrain the possible values for the first corrected active power reference, a limiter 410 may be provided that is operative to limit P_{CORR,V1} to a value that is within P_{CORR,MIN} and P_{CORR},_{MAX} (e.g., between 0.5 and 1.0), thereby generating a second corrected active power reference P_{CORR,V2} for the VCM adaptive controller 402. Each of P_{CORR,MIN} and P_{CORR},_{MAX} may be of any appropriate value.

The second portion of the controller 400 is a Power Factor Control Mode (PFCM) adaptive controller 404 that is operable to generate a derated active power reference P_{CORR},_{PF2} when the power factor (PF) reference setting is such that the synchronous generator 214 cannot operate at that PF while generating the rated active power (see Figure 6). To achieve this functionality, the controller 404 first receives a PF_{REF} signal, for example, from a utility or grid operator. The P_{FREF} signal may be fed to a limiter 412 to constrain the possible PF reference values to within PF_{MIN} and PF_{MAX} (e.g., between 0.6 -1.0 PF). Each of PF_{MIN} and PF_{MAX} may be of any appropriate value. The resulting signal may then be fed to a PQ Capability Table 414 that is operative to receive a PF reference signal, and to generate a first corrected active power reference P_{CORR},_{PF1} that is dependent upon the specific capabilities of the synchronous generator 214. As an example, the PQ Capability Table 414 may include a lookup table that includes capability data for the synchronous generator 214. To constrain the values for the first corrected active power reference P_{CORR},_{PF1}, a limiter 416 may be provided that is operative to limit P_{CORR},_{PF1} to a value that is between P_{CORR},_{MIN} and P_{CORR},_{MAX} (e.g., between 0.6 and 1.0 of rated active power), thereby generating P_{CORR},_{PF2} for the PF Control mode adaptive controller 404. Each of P_{CORR},_{MIN} and P_{CORR},_{MAX} may be of any appropriate value.

In the embodiment shown in Figure 5, the output signals P_{CORR},_{V2} and P_{CORR},_{PF2} are each fed into a module 418 that is operable to compare the two inputs, and to output the minimum of the two, P_{CORR} to the turbine control system (TCS) module 236. In this regard the active power of the synchronous generator 214 may then be derated by at least an amount that is required by the Voltage Control mode module 402 and the PF control mode module 404. In operation, the TCS module 236 may utilize the P_{CORR} reference to modify the active power delivery of the synchronous generator 214 to achieve the desired voltage or PF characteristics.

To implement the active power derating functionality, the turbine control system module 236 may interact with the TRG control system module 228 to adjust to the speed-torque characteristics of the TRG 210. That is, the control system modules 228 and 236 may selectively adjust the position of the guide vanes 624 of the TRG 210 such that the active power delivery of the synchronous generator 214 is reduced from the rated active power dependent on the adapted active power reference P_{CORR}.

Figure 6 illustrates an active and reactive power capability curve (PQ capability curve) 500 for a synchronous generator, such as the synchronous generator 214 shown in Figure 1. Generally, the ability of a synchronous generator to provide reactive power support is dependent upon its active power production. The generator's prime mover (e.g., a wind turbine rotor) may be designed with less capacity than the generator itself, resulting in the "Wind Turbine Drive Train Power Limit" shown in Figure 6. Further, the current carrying capability of the armature (stator) of the generator results in the "Stator Heating Limit." Additionally, production of reactive power involves increasing the magnetic field to raise the generator's terminal voltage, which in turn requires increasing the current in the rotor field winding. The current capability of the rotor field winding results in the "Field Heating Limit." Conversely, absorption of a large amount of reactive power leads to an "Under Excitation Limit," which is determined by both system stability limits and also heating limits in the stator winding when significant reactive power is drawn from a power grid.

The point 502 in Figure 6 indicates the maximum amount of reactive power that can be absorbed by the synchronous generator 214 while the generator is operating at rated active power (e.g., 2 MW). In this example, this condition occurs when the synchronous generator 214 is operating at a power factor of 0.9 leading. The point 504 illustrates that, in order for the synchronous generator 214 to absorb additional reactive power, the active power must be derated to a level that is below the Wind Turbine Drive Train Power Limit (i.e., rated power). That is, in order for the generator to operate at a PF that is less than 0.9, the active power may be derated using, for example, the controller 400 shown in Figure 5.

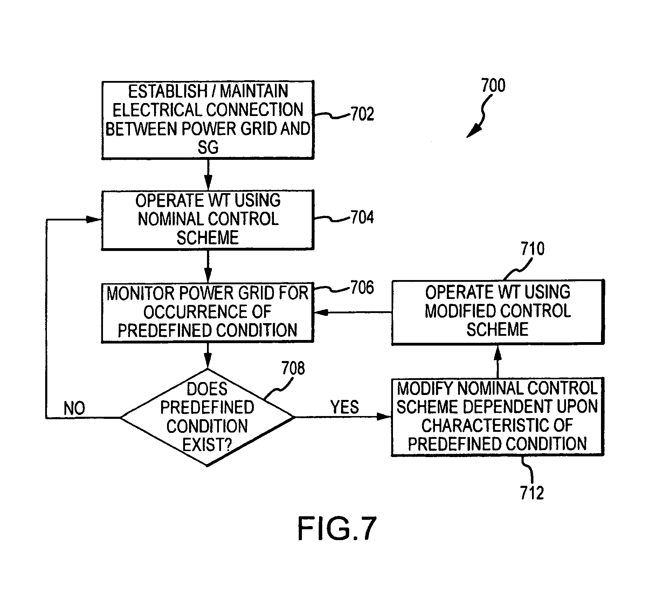

Figure 7 is an operations protocol 700 of one embodiment of an adaptive voltage control scheme for a wind turbine (WT), including the wind turbine 200 shown in Figure 1. The wind turbine may include a synchronous generator that is coupled directly to a power grid (see e.g., the synchronous generator 214 of the wind turbine 200 shown in Figure 1). In operation, the operations protocol 700 may include maintaining an electrical connection between the synchronous generator (SG) and the power grid (step 702). For example, stator terminals of the synchronous generator may be directly coupled to the power grid.

The operations protocol 700 may also include operating the wind turbine according to a nominal control scheme (step 704). For example, the nominal control scheme may include an automatic voltage regulator (AVR) that is configured to measure a voltage of the power grid, and to control the voltage of the power grid by selectively adjusting an amount of reactive power supplied or absorbed by the synchronous generator. In this regard, the AVR may be configured to receive a voltage reference, and to cause the voltage of the power grid to track the voltage reference using any suitable control scheme (e.g., PI control).

To account for a predefined condition of the power grid, such as voltage fluctuations due to varying consumer loads on a weak grid, the operations protocol 700 may include monitoring the power grid for the occurrence of the predefined condition (step 706). As an example, the monitoring step 706 may include measuring and analyzing a reactive power characteristic of the synchronous generator.

The operations protocol 700 may also include determining whether the predefined condition exists (step 708). As can be appreciated, if the predefined condition is not detected by the monitoring step 706, then the operations protocol 700 may continue to operate the WT using the nominal control scheme. However, if the operations protocol 700 determines that the predefined condition is present, the operations protocol 700 may modify the nominal control scheme dependent upon a characteristic of the predefined condition (step 712).

As an example, the nominal control scheme may be modified dependent on a magnitude and/or an integral of a magnitude of a reactive power characteristic (e.g., reactive power absorbed or delivered) of the synchronous generator. Further, continuing with the example above, the nominal control scheme may be modified by providing a modified (or adapted) voltage reference to the nominal control scheme to provide a modified control scheme. Finally, the wind turbine may be operated using the modified control scheme (step 710) so long as the predefined condition exists.

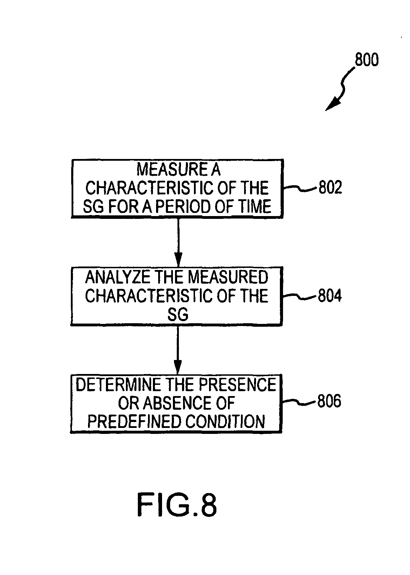

Figure 8 illustrates a monitoring protocol 800 that may be used, for example, in an operations protocol such as the operations protocol 700 shown in Figure 7. Inifially, the monitoring protocol 800 may measure a characteristic of the synchronous generator for a period of time (step 802). For example, a reactive power characteristic, a voltage characteristic, a current characteristic, or any other suitable characteristic may be measured, The next step in the monitoring protocol is to analyze the measured characteristic of the synchronous generator (step 804). As an example, the analyzing step 804 may include performing one or more mathematical operations on the measured characteristic (e.g., PI control, or the like). Once the measured characteristic has been analyzed, the monitoring protocol 806 may determine the presence or absence of the predefined condition on the power grid.

In one example, reactive power characteristic is measured during step 802, and the measured reactive power characteristic is fed to PI control logic during the analyzing step 804. In this regard, the PI control logic may be operative to analyze the measured reactive power characteristic, and to determine the presence or absence of the predefined condition (e.g., voltage fluctuations due to a weak grid). As an example, the PI control logic may determine that a voltage characteristic of the power grid is due to a weak grid because the synchronous generator is absorbing a relatively large amount of reactive power for a relatively long period of time, thereby indicating that the voltage of the power grid is above a rated voltage.

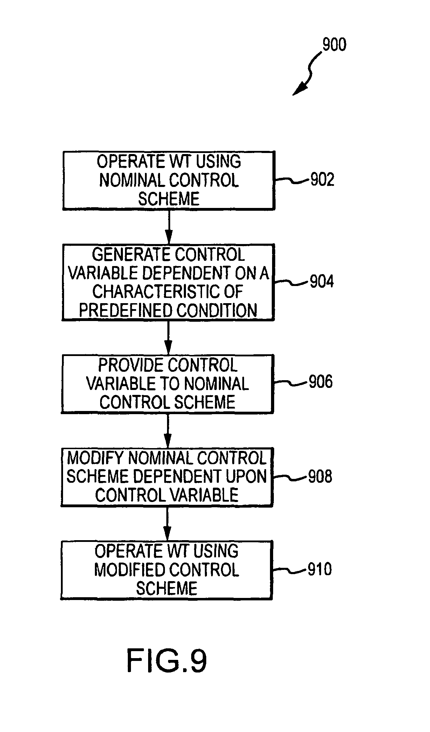

Figure 9 illustrates an adaptive control protocol 900 that may be used, for example, in an operations protocol such as the operations protocol 700 shown in Figure 7. Initially, the wind turbine (WT) may be operated using a nominal control scheme (step 902). As discussed above, the nominal control scheme may include an automatic voltage regulator (AVR) that is configured to measure a voltage of the power grid, and to control the voltage of the power grid by selectively adjusting an amount of reactive power supplied or absorbed by the synchronous generator. In this regard, AVR may be configured to receive a control variable (e.g., a voltage reference), and to cause the voltage of the power grid to track the voltage reference using any suitable control scheme (e.g., PI control).

Next, if the monitoring protocol 800 (see Figure 8) determines that the predefined condition is present, the adaptive control protocol 900 may generate a control variable that is dependent on a characteristic of the predefined condition (step 904). For example, in the case where the predefined condition is determined using a reactive power characteristic, the control variable may be dependent upon one or more features of the reactive power characteristic (e.g., a magnitude and/or an integral of the magnitude of the reactive power characteristic).

The control variable may then be provided to the nominal control scheme (step 906), which may have the effect of modifying the nominal control scheme dependent upon the control variable (step 908).

For example, a modified (or adapted) voltage reference may be provided to the nominal control scheme to generate the modified control scheme. Finally, the wind turbine may be operated according to the modified control scheme using the control variable that is dependent upon a characteristic of the predefined condition (step 910).

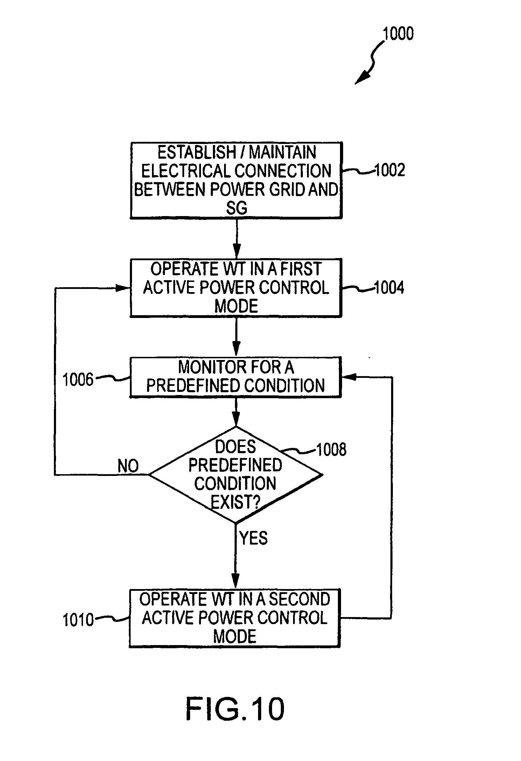

Figure 10 illustrates an operations protocol 1000 for one embodiment of an active power delivery control scheme for a wind turbine (WT). As in previously described embodiments, the wind turbine may include a synchronous generator that is coupled directly to a power grid (see e.g., the wind turbine 200 shown in Figure 1). In operation, the operations protocol 1000 may include maintaining an electrical connection between the synchronous generator (SG) and the power grid (step 1002). For example, stator terminals of the synchronous generator may be directly coupled to the power grid.

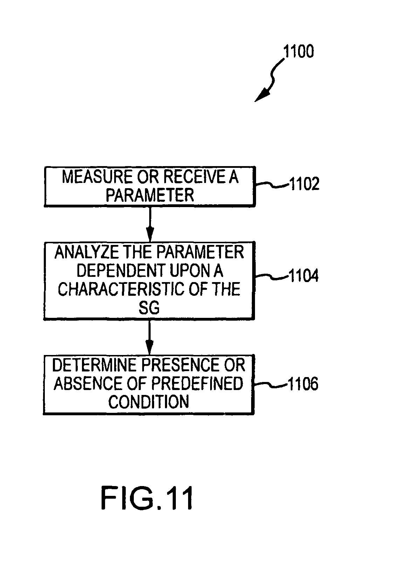

The operations protocol 1000 may also include operating the wind turbine in a first active power control mode (step 1004). For example, the first active power control mode may include operating the synchronous generator of the wind turbine at a level that is substantially equal to a rated active power level. The operations protocol 1000 may also include monitoring for a predefined condition (step 1006), and determining whether the predefined condition exists (step 1008). The two steps 1006 and 1008 are described in further detail below with reference to Figure 11.

If it is determined that the predefined condition exists, the operations protocol 1000 may then operate the wind turbine in a second active power control mode (step 1010). Further, the second active power control mode may include operating the synchronous generator at an active power level that is less than the rated active power level (e.g., 80% of the rated active power level).

As noted above in the discussion associated with Figure 5, in certain circumstances it may be desirable to operate the synchronous generator at an active power level that is below the rated active power level (i.e., active power derating). For example, the physical characteristics of the synchronous generator may dictate that the active power should be reduced in circumstances where it is desirable for the synchronous generator to consume a relatively large amount of reactive power.

Figure 11 illustrates a protocol 1100 for monitoring for a predefined condition, and for determining whether the predefined condition is present. Initially, the protocol 1100 may be operative to measure or receive a parameter (step 1102). Next, the protocol 1100 may be operative to analyze the parameter dependent upon a characteristic of the synchronous generator of the wind turbine (step 1104). Further, the protocol 1100 may include determining the presence or absence of the predefined condition (step 1106), so that the wind turbine may be operated accordingly in either the first active power control mode or the second active power control mode. As can be appreciated, the predefined condition may include any suitable condition where it may be desirable to operate a wind turbine in either a first or second active power control mode dependent upon the condition.

For example, the step 1102 may be operative to receive a power factor reference as the parameter (e.g., from a grid or utility operator). In this example, the steps 1104 and 1106 may compare the power factor reference with the operational characteristics (e.g., PQ capability curve) of the synchronous generator, and if necessary, operate to reduce the active power level of the synchronous generator so that it may operate at the power factor specified by the power factor reference. To achieve this, the power factor reference may be compared to a lookup table that includes the **PQ** capability characteristics of the synchronous generator.

In another example, the protocol 1100 may include logic that is operative to measure a voltage of the power grid, and to reduce the active power level of the synchronous generator when it is desirable to increase the reactive power absorbed by the synchronous generator above a maximum amount that is possible when operating at a rated active power level (see Figure 5 and related discussion). This condition may occur, for example, when the voltage of the power grid is too high even when the synchronous generator is absorbing the maximum reactive power possible when operating at rated active power, such that it is desirable for the synchronous generator to absorb additional reactive power to attempt to lower the voltage of the power grid.

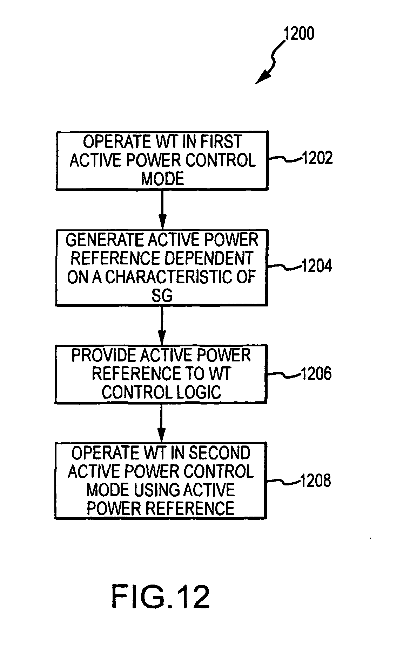

Figure 12 illustrates a protocol 1200 for transitioning a wind turbine between a first active power control mode to a second active power control mode. Initially, the wind turbine may be operated in a first active power control mode (step 1202). Then, an active power reference may be generated dependent on a characteristic of the synchronous generator, (step 1204). For example, the active power reference may be generated dependent upon the operational characteristics of the synchronous generator (e.g., PQ capability curve) and a measured or received parameter (see step 1102 of Figure 11).

Once the active power reference has been generated, it may then be provided to control logic used to operate the wind turbine (step 1206). The control logic in turn may be operative to operate the wind turbine in a second active power control mode using the active power reference (step 1208). For example, the control logic may be operative to control various components of the wind turbine, such as the synchronous generator, the rotor blades, or a torque-regulating gearbox (e.g., the TRG 210 shown in Figures 1-3), to operate the wind turbine in the first and second active power control modes.

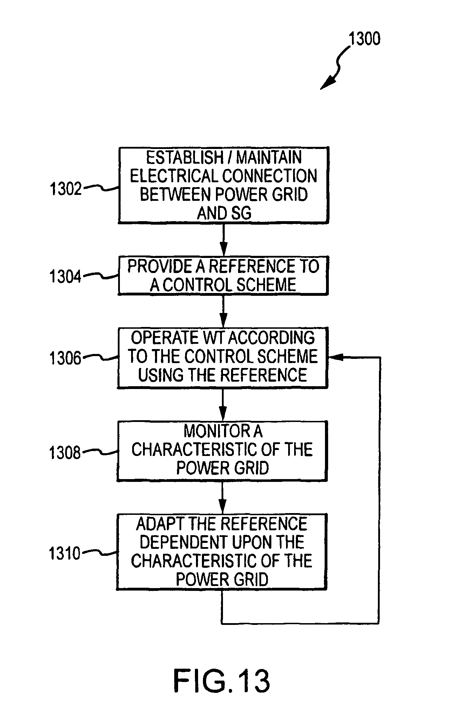

Figure 13 illustrates an operations protocol 1300 of another embodiment of an adaptive control scheme for a wind turbine (WT). The wind turbine may include a synchronous generator that is coupled directly to a power grid (see e.g., the wind turbine 200 shown in Figure 1). In operation, the operations protocol 1300 may include maintaining an electrical connection between the synchronous generator (SG) and the power grid (step 1302). For example, stator terminals of the synchronous generator may be directly coupled to the power grid.

The operations protocol 1300 may also include providing a reference to a control scheme that is used to operate the wind turbine (step 1304). As an example, the control scheme may be operative to selectively control a voltage of the power grid using the reference. The operations protocol 1300 may then operate the wind turbine according to the control scheme using the reference (step 1306).

The operations protocol 1300 may further be operative to monitor a characteristic of the power grid (step 1308), and to adapt the reference dependent upon the monitored characteristic of the power grid (step 1310). As an example, the monitoring may include measuring a reactive power characteristic over a period of time, and analyzing it (e.g., using PI control logic) to determine a characteristic of the power grid, such as the presence of voltage fluctuations caused by varying consumer loads on a weak grid. Then, the operations protocol 1300 may be operative to continuously adapt the reference provided to the control scheme such that, for example, the characteristic of the voltage grid may be compensated.

In one example, the control scheme includes an AVR that is configured to selectively control the voltage of the power grid to track a reference voltage by adjusting the reactive power absorbed or supplied by the synchronous generator. In this example, the voltage reference may be adapted such that conditions caused by a weak grid may substantially be "ignored" by the adapted control scheme. That is, if the monitoring step 1308 determines that the voltage of the power grid is higher than a rated voltage due to the weak grid, the reference voltage of the AVR may be adaptively increased, so that the synchronous generator is not controlled to absorb a relatively large amount of reactive power for a relatively long period of time, which may diminish the performance of the synchronous generator.

While the invention has been illustrated and described in detail in the drawings and foregoing description, such illustration and description is to be considered as exemplary and not restrictive in character. For example, certain embodiments described hereinabove may be combinable with other described embodiments and/or arranged in other ways (e.g., process elements may be performed in other sequences). Accordingly, it should be understood that only the preferred embodiment and variants thereof have been shown and described and that all changes and modifications that come within the invention as defined by the claims are desired to be protected.

## Claims

1. A method for controlling the active power delivery for a generator (214) of a wind turbine (200) connected to a power grid (224), the method comprising:
receiving a threshold voltage reference;
measuring a voltage of the power grid (224);
subtracting the measured voltage from the threshold voltage reference to generate a voltage difference value;
processing the voltage difference value to generate a voltage mode adapted active power reference;
receiving a power factor reference;
analyzing the power factor reference in relation to one or more physical capabilities of the generator (214);
generating a power factor mode adapted active power reference that is dependent upon the power factor reference and the one or more physical capabilities of the generator (214); **characterized in that** the method further comprises
determining the minimum between the power factor mode adapted active power reference and the voltage mode adapted active power reference to generate a minimum adapted active power reference; and
providing the minimum adapted active power reference to an active power controller of the wind turbine generator (214).

2. The method of Claim 1, further comprising:
limiting each of the power factor mode adapted active power reference and the voltage mode adapted active power reference to within a predetermined range.

3. The method of any of Claims 1-2, wherein the processing comprises:
applying an integrator (408) to the voltage difference value.

4. The method of any of Claims 1-3, wherein the threshold voltage reference is between about 101% and 105% of a rated voltage of the power grid (224).

5. The method of any of Claims 1-4, wherein the threshold voltage reference is dependent upon a maximum reactive power that can be consumed by the synchronous generator (214) when operating at a rated active power.

6. The method of any of Claims 1-5, wherein the active power delivery is reduced by an amount that is dependent upon at least one of the processing step and the analyzing step.

7. The method of any of Claims 1-6, wherein the generator is a synchronous generator (214).

8. The method of any of Claims 1-7, wherein the analyzing step comprises:
comparing the power factor reference with the one or more physical capabilities of the generator (214).

9. The method of any of Claims 1-8, further comprising:
limiting the power factor reference to be within a predefined range.

10. The method of any of Claims 1-9, further comprising:
reducing an active power delivery of the generator (214).

11. The method of Claim 10, wherein the wind turbine (200) comprises a turbine rotor (202) coupled to the synchronous generator (214) with a torque regulator (210), wherein the first operating step or the second operating step comprises:
adjusting operation of the torque regulator (210).

12. The method of Claim 11, wherein the adjusting operation of the torque regulator (210) step comprises adjusting an amount of torque that is transferred from the turbine rotor (202) to the synchronous generator (214).

13. The method of Claim 10, wherein the generator is a synchronous generator (214), and wherein the wind turbine (200) comprises a turbine rotor (202) coupled to the synchronous generator (214) through a torque-regulating gearbox (210), the reducing step comprising:
adjusting operation of the torque-regulating gearbox (210).

14. The method of Claim 13, wherein the adjusting operation step comprises adjusting a torque conversion characteristic of the torque-regulating gearbox (210).

15. The method of any of Claims 13-14, wherein the torque-regulating gearbox comprises a hydraulic circuit (620, 622, 626, 624), and wherein the adjusting operation step comprises:
adjusting a mass flow of hydraulic fluid through the hydraulic circuit (620, 622, 626, 624).

16. The method of any of Claims 13-15, wherein the torque-regulating gearbox comprises a plurality of guide vanes (624) disposed in a guide vanes housing (626), and wherein the adjusting operation step comprises:
adjusting a position of the plurality of guide vanes (624).

17. The method of any of Claims 13-16, wherein the adjusting operation step comprises:
adjusting an amount of energy absorbed by the torque-regulating gearbox.

18. A wind turbine (200) connected to a power grid (224), the wind turbine (200) comprising:
a synchronous generator (214) electrically connected to the power grid (224); and
control logic that is configured to:
receive a threshold voltage reference;
receive a measured voltage of the power grid (224);
subtract the measured voltage from the threshold voltage reference to generate a voltage difference value;
process the voltage difference value to generate a voltage mode adapted active power reference;
receive a power factor reference;
analyze the power factor reference in relation to one or more physical capabilities of the generator (214);
generate an power factor mode adapted active power reference that is dependent upon the power factor reference and the one or more physical capabilities of the generator (214);
determine the minimum between the power factor mode adapted active power reference and the voltage mode adapted active power reference to generate a minimum adapted active power reference; and
provide the minimum adapted active power reference to an active power controller of the wind turbine generator (214).

## Patentansprüche

1. Verfahren zur Steuerung der Wirkleistungszufuhr für einen Generator (214) einer an ein Stromnetz (224) angebundenen Windenergieanlage (200), wobei das Verfahren umfasst:
Empfangen eines Schwellenspannung-Referenzwertes;
Messen einer Spannung des öffentlichen Stromnetzes (224);
Subtrahieren der gemessenen Spannung von dem Schwellenspannung-Referenzwert,
um einen Spannungsdifferenzwert zu erzeugen;
Verarbeiten des Spannungsdifferenzwertes, um einen Spannungsmodus-adaptierten-Wirkleistungs-Referenzwert zu erzeugen;
Empfangen eines Leistungsfaktor-Referenzwertes;
Analysieren des Leistungsfaktor-Referenzwertes in Bezug zu einer oder mehrerer physikalischer Leistungsfähigkeiten des Generators (214);
Erzeugen eines Leistungsfaktormodus-adaptierten-Wirkleistungs-Referenzwertes, der von dem Leistungsfaktor-Referenzwert und von der einen oder den mehreren physikalischen Leistungsfähigkeiten des Generators (214) abhängig ist; **dadurch gekennzeichnet, dass** das Verfahren weiterhin umfasst:
Ermitteln des Minimums zwischen dem Leistungsfaktormodus-adaptierten-Wirkleistungs-Referenzwert und dem Spannungsmodus-adaptierten-Wirkleistungs-Referenzwert, um einen minimaladaptierten-Wirkleistungs-Referenzwert zu erzeugen;
und zur Verfügung Stellen des minimaladaptierten-Wirkleistungs-Referenzwert an einen Wirkleistungscontroller des Windenergieanlagengenerators (214).

2. Verfahren gemäß Anspruch 1, das weiterhin das Beschränken des Leistungsfaktormodus-adaptierten-Wirkleistungs-Referenzwertes und des Spannungsmodus-adaptierten-Wirkleistungs-Referenzwert auf einen vorher definierten Bereich umfasst.

3. Verfahren gemäß einem der Ansprüche 1 bis 2, wobei das Erzeugen das Anwenden eines Integrators (408) auf den Spannungsdifferenzwert umfasst.

4. Verfahren gemäß einem der Ansprüche 1 bis 3, wobei der Schwellenspannung-Referenzwert zwischen ungefähr 101% und 105% einer Nennspannung des Stromnetzes ist.

5. Verfahren gemäß einem der Ansprüche 1 bis 4, wobei der Schwellenspannung-Referenzwert von einer Maximalblindleistung abhängig ist, die bei Nennwirkleistungsbetrieb durch den Synchrongenerator verbraucht werden kann.

6. Verfahren gemäß einem der Ansprüche 1 bis 5, wobei die Wirkleistungszufuhr um einen Betag reduziert wird, die wenigstens von dem Erzeugungsschritt und dem Analysierschritt abhängig ist.

7. Verfahren gemäß einem der Ansprüche 1 bis 6, wobei der Generator ein Synchrongenerator (214) ist.

8. Verfahren gemäß einem der Ansprüche 1 bis 7, wobei der Analysierschritt das Vergleichen des Leistungsfaktor-Referenzwertes mit dem einen oder den mehreren physikalischen Leistungsfähigkeiten des Generators (214) umfasst.

9. Verfahren gemäß einem der Ansprüche 1 bis 8, das weiterhin das Beschränken des Leistungsfaktor -Referenzwertes auf einen vorher definierten Bereich umfasst.

10. Verfahren gemäß einem der Ansprüche 1 bis 9, das weiterhin das Reduzieren der Wirkleistungszufuhr des Generators (214) umfasst.

11. Verfahren gemäß Anspruch 10, wobei die Windenergieanlage (200) einen Rotor (202) umfasst, der mit dem Synchrongenerator (214) mit einem Drehmomentregler (210) gekoppelt ist, wobei der erste Betriebsschritt oder der zweite Betriebsschritt das Einstellen des Betriebs des Drehmomentreglers (210) umfasst.

12. Verfahren gemäß Anspruch 1, wobei der Schritt zur Einstellung des Betriebs des Drehmomentreglers (210) das Einstellen der Höhe des Drehmoments umfasst, das von dem Rotor (202) an den Synchrongenerator (214) übertragen wird.

13. Verfahren gemäß Anspruch 10, wobei der Generator ein Synchrongenerator (214) ist und wobei die Windenergieanlage (200) einen Rotor (202) umfasst, der mit dem Synchrongenerator (214) über ein drehmomentregulierendes Getriebe (210) gekoppelt ist, wobei der Reduzierschritt das Anpassen des Betriebs des drehmomentregulierenden Getriebes (210) umfasst.

14. Verfahren gemäß Anspruch 13, wobei der Schritt zum Anpassen des Betriebs das Anpassen einer Drehmomentumwandlungscharakteristik des drehmomentregulierenden Getriebes umfasst.

15. Verfahren gemäß einem der Ansprüche 13 bis 14, wobei das drehmomentregulierende Getriebe einen Hydraulikkreislauf (620, 622, 626, 624) umfasst und wobei der Schritt zum Anpassen des Betriebs das Anpassen des Massendurchflusses der Hydraulikflüssigkeit durch den Hydraulikkreislauf (620, 622, 626, 624) umfasst.

16. Verfahren gemäß einem der Ansprüche 13 bis 15, wobei das drehmomentregelnde Getriebe eine Vielzahl von Leitschaufeln (624) umfasst, die in einem Leitschaufelgehäuse angeordnet sind, und wobei der Schritt zum Anpassen des Betriebs das Anpassen einer Position der Vielzahl von Leitschaufeln (624) umfasst.

17. Verfahren gemäß einem der Ansprüche 13 bis 16, wobei der Schritt zum Anpassen des Betriebs das Anpassen einer Energiemenge umfasst, die durch das drehmomentregelnde Getriebe absorbiert wird.

18. Windturbine (200) verbunden mit einem Stromnetz (224), wobei die Windenergieanlage umfasst:
einen Synchrongenerator, der elektrisch mit dem Stromnetz (224) verbunden ist, und
eine Steuerungslogik, die ausgebildet ist, um
einen Schwellenspannung-Referenzwertes zu empfangen;
eine gemessene Spannung des Stromnetzes (224) zu empfangen;
die gemessene Spannung von dem Schwellenspannung-Referenzwert zu subtrahieren, um einen Spannungsdifferenzwert zu erzeugen;
den Spannungsdifferenzwert zu verarbeiten, um einen Spannungsmodus-adaptierten-Wirkleistungs-Referenzwert zu erzeugen;
einen Leistungsfaktor-Referenzwertes zu empfangen;
den Leistungsfaktor-Referenzwert in Bezug zu einer oder mehrerer physikalischer Leistungsfähigkeiten des Generators (214) zu analysieren;
einen Leistungsfaktor-adaptierten-Wirkleistungs-Referenzwertes zu erzeugen, der von dem Leistungsfaktor-Referenzwert und von der einen oder den mehreren physikalischen Leistungsfähigkeiten des Generators (214) abhängig ist;
das Minimum zwischen dem Leistungsfaktormodus-adaptierten-Wirkleistungs-Referenzwertes und dem Spannungsmodus-adaptierten-Wirkleistungs-Referenzwert zu ermitteln, um einen minimaladaptierten-Wirkleistungs-Referenzwert zu erzeugen; und
den minimaladaptierten-Wirkleistungs-Referenzwert an einen Wirkleistungscontroller des Windenergieanlagengenerators (214) bereitzustellen.

## Revendications

1. Procédé pour commander la fourniture de puissance active pour un générateur (214) d'une éolienne (200) reliée à un réseau électrique (224), le procédé comprenant :
la réception d'une référence de tension de seuil ;
la mesure d'une tension du réseau électrique (224) ;
la soustraction de la tension mesurée à la référence de tension de seuil pour générer une valeur de différence de tension ;
le traitement de la valeur de différence de tension pour générer une référence de puissance active adaptée au mode de tension ;
la réception d'une référence de facteur de puissance ;
l'analyse de la référence de facteur de puissance par rapport à une ou plusieurs capacités physiques du générateur (214) ;
la génération d'une référence de puissance active adaptée au mode de facteur de puissance qui est dépendante de la référence de facteur de puissance et de l'une ou
plusieurs capacités physiques du générateur (214) ; **caractérisé en ce que** le procédé comprend en outre :
la détermination du minimum entre la référence de puissance active adaptée au mode de facteur de puissance et la référence de puissance active adaptée au mode de tension pour générer une référence de puissance active adaptée minimale ; et
la fourniture de la référence de puissance active adaptée minimale à un contrôleur de puissance active du générateur d'éolienne (214).

2. Procédé selon la revendication 1, comprenant en outre :
la limitation de chacune de la référence de puissance active adaptée au mode de facteur de puissance et de la référence de puissance active adaptée au mode de tension à l'intérieur d'une plage prédéterminée.

3. Procédé selon l'une quelconque des revendications 1 et 2, dans lequel le traitement comprend :
l'application d'un intégrateur (408) à la valeur de différence de tension.

4. Procédé selon l'une quelconque des revendications 1 à 3, dans lequel la référence de tension de seuil est entre environ 101 % et 105 % d'une tension nominale du réseau électrique (224).

5. Procédé selon l'une quelconque des revendications 1 à 4, dans lequel la référence de tension de seuil est dépendante d'une puissance réactive maximale qui peut être consommée par le générateur synchrone (214) lors d'un fonctionnement à une puissance active nominale.

6. Procédé selon l'une quelconque des revendications 1 à 5, dans lequel la puissance active fournie est réduite d'une quantité qui est dépendante d'au moins l'une de l'étape de traitement et de l'étape d'analyse.

7. Procédé selon l'une quelconque des revendications 1 à 6, dans lequel le générateur est un générateur synchrone (214).

8. Procédé selon l'une quelconque des revendications 1 à 7, dans lequel l'étape d'analyse comprend :
la comparaison de la référence de facteur de puissance à l'une ou plusieurs capacités physiques du générateur (214).

9. Procédé selon l'une quelconque des revendications 1 à 8, comprenant en outre :
la limitation de la référence de facteur de puissance pour qu'elle soit à l'intérieur d'une plage prédéfinie.

10. Procédé selon l'une quelconque des revendications 1 à 9, comprenant en outre :
la réduction de la puissance active fournie du générateur (214).

11. Procédé selon la revendication 10, dans lequel l'éolienne (200) comprend un rotor de turbine (202) couplé au générateur synchrone (214) avec un régulateur de couple (210), dans lequel la première étape de fonctionnement ou la deuxième étape de fonctionnement comprend :
l'ajustement du fonctionnement du régulateur de couple (210).

12. Procédé selon la revendication 11, dans lequel l'étape de l'ajustement du fonctionnement du régulateur de couple (210) comprend l'ajustement d'une quantité de couple qui est transférée du rotor de turbine (202) au générateur synchrone (214).

13. Procédé selon la revendication 10, dans lequel le générateur est un générateur synchrone (214), et dans lequel l'éolienne (200) comprend un rotor de turbine (202) couplé au générateur synchrone (214) par l'intermédiaire d'un multiplicateur à régulation de couple (210), l'étape de réduction comprenant :
l'ajustement du fonctionnement du multiplicateur à régulation de couple (210).

14. Procédé selon la revendication 13, dans lequel l'étape de l'ajustement du fonctionnement comprend l'ajustement d'une caractéristique de conversion de couple du multiplicateur à régulation de couple (210).

15. Procédé selon l'une quelconque des revendications 13 et 14, dans lequel le multiplicateur à régulation de couple comprend un circuit hydraulique (620, 622, 626, 624), et dans lequel l'étape de l'ajustement du fonctionnement comprend :
l'ajustement d'un débit volumétrique de fluide hydraulique à travers le circuit hydraulique (620, 622, 626, 624).

16. Procédé selon l'une quelconque des revendications 13 à 15, dans lequel le multiplicateur à régulation de couple comprend une pluralité d'aubes directrices (624) disposées dans un boîtier d'aubes directrices (626), et dans lequel l'étape de l'ajustement du fonctionnement comprend :
l'ajustement d'une position de la pluralité d'aubes directrices (624).

17. Procédé selon l'une quelconque des revendications 13 à 16, dans lequel l'étape de l'ajustement du fonctionnement comprend :
l'ajustement d'une quantité d'énergie absorbée par le multiplicateur à régulation de couple.

18. Eolienne (200) reliée à un réseau électrique (224), l'éolienne (200) comprenant :
un générateur synchrone (214) relié électriquement au réseau électrique (224) ; et
une logique de commande qui est configurée pour effectuer :
la réception d'une référence de tension de seuil ;
la réception d'une tension mesurée du réseau électrique (224) ;
la soustraction de la tension mesurée à la référence de tension de seuil pour générer une valeur de différence de tension ;
le traitement de la valeur de différence de tension pour générer une référence de puissance active adaptée au mode de tension ;
la réception d'une référence de facteur de puissance ;
l'analyse de la référence de facteur de puissance par rapport à une ou plusieurs capacités physiques du générateur (214) ;
la génération d'une référence de puissance active adaptée au mode de facteur de puissance qui est dépendante de la référence de facteur de puissance et de l'une ou
plusieurs capacités physiques du générateur (214) ;
la détermination du minimum entre la référence de puissance active adaptée au mode de facteur de puissance et la référence de puissance active adaptée au mode de tension pour générer une référence de puissance active adaptée minimale ; et
la fourniture de la référence de puissance active adaptée minimale à un contrôleur de puissance active du générateur d'éolienne (214).
